# EUROPEAN PATENT SPECIFICATION

(11) **EP 0 964 890 B1**
(45) Date of publication and mention of the grant of the patent: **13.10.2004**
(21) Application number: 98910191.0
(22) Date of filing: 06.03.1998
(51) Int. Cl.: C08L 23/16

(54) **ELASTOMER COMPOSITIONS HAVING IMPROVED ABRASION RESISTANCE, COEFFICIENT OF FRICTION AND HOT GREEN STRENGTH**
ELASTOMERZUSAMMENSETZUNGEN MIT VERBESSERTER ABRIEBFESTIGKEIT, REIBUNGSKOEFFIZIENTEN UND GRÜNFESTIGKEITEN
COMPOSITIONS A BASE D'ELASTOMERE PRESENTANT UNE RESISTANCE A L'ABRASION, UN COEFFICIENT DE FROTTEMENT ET UNE RESISTANCE A LA DEFORMATION A CHAUD AMELIORES

(30) Priority: 07.03.1997 US 40485 P; 18.12.1997 US 68092 P; 02.03.1998 US 33206
(43) Date of publication of application: 22.12.1999
(73) Proprietor: DUPONT DOW ELASTOMERS L.L.C., Wilmington, DE 19809 (US)
(72) Inventor: HUGHES, Morgan, Mark, Angleton, TX 77515 (US); WEAVER, Laura, Bauerle, Hudson, OH 44236 (US); MARTIN, Michael, Francis, Lake Jackson, TX 77566 (US); LAUGHNER, Michael, Kenneth, Lake Jackson, TX 77566 (US); PARIKH, Deepak, Lake Jackson, TX 77566 (US)
(74) Representative: Raynor, John
(86) International application number: PCT/US1998/004353
(87) International publication number: WO 1998/039385

(56) References cited:
- EP-A- 0 779 333
- GB-A- 1 180 281
- US-A- 3 851 411
- US-A- 4 036 912
- US-A- 4 239 862

## Description

### FIELD OF THE INVENTION

This invention relates generally to elastomer compositions that comprise an elastomeric ethylene/alpha (α)-olefin (EAO) polymer and a crystalline polyolefin (CPO), composition preparation, composition use in processes such as profile extrusion and injection molding, and articles of manufacture, such as outer soles for footwear, resulting from such processes. This invention particularly relates to such compositions wherein the CPO forms a phase that is at least co-continuous with a phase formed from the EAO polymer, methods for preparing the compositions, use of the compositions and resulting articles of manufacture. This invention also relates to such compositions as modified by a coefficient of friction (COF) enhancing (COFE) material. A COFE material, when added to a composition, provides an increase in COF on wet quarry tile (hereinafter "Wet COF"), as measured in accordance with ASTM D-1894. over that obtained with the composition in the absence of the COFE material. This invention further relates to certain COFE-containing compositions that have improved processibility relative to compositions that lack the COFE material. This invention still further relates to a process variation that yields an elastomer composition with an improved Wet COF in the absence of a COFE material.

### BACKGROUND OF THE INVENTION

W. K. Fischer provides a variety of teachings regarding blends of an EAO polymer with a polyolefin. For example, USP 3,758,643 and USP 3,806,558 contain teachings about partially cured blends of an EAO copolymer with a polyolefin. USP 3,835,201 discloses uncured blends of an unsaturated rubbery interpolymer of at least two different α-mono-olefins with a small amount of a copolymerizable non-conjugated diene and a resinous high molecular weight (MW) poly-α-mono-olefin plastic such as PP. The rubbery interpolymer must have a high zero shear viscosity or melt viscosity at zero shear rate. These interpolymers are regarded as not processible because they do not form a band on a cold mill. USP 3,862,106 relates to a thermoplastic dynamically cured blend of an EAO copolymer with a polyolefin. Both partial curing and dynamic curing lead to an increase in insoluble gel content. Testing for insoluble gel content (gel value) uses cyclohexane at 23°C. An acceptable substitute is boiling xylene, a common solvent that yields a gel value 30 - 50 % lower than that found using cyclohexane. Fischer provides several examples in which gel particles are present at a high enough level to cause unacceptable roughness when partially cured or dynamically cured compositions are extruded as a one eighth inch rod.

Mike Wilson, in "Slip Resistance Performance of Soling Materials", SATRA Bulletin, May 1996, pages 77-79, a publication produced by SATRA Footwear Technology Centre, suggests, at page 78, that a minimum coefficient of friction (COF) for footwear soles and heels on dry and wet quarry tile is 0.3. He also suggests, at page 79, that footwear for sports and industrial applications may be more demanding in terms of slip resistance and require a COF of at least 0.4, sometimes at least 0.6.

US-A-4,239,862 discloses thermoplastic elastomers that comprise a blend of an ethylene/alpha-olefin copolymer rubber, a crystalline polyolefin resin and a long chain aliphatic alcohol that has at least 16 carbon atoms. The alpha-olefin contains 1 to 12 carbon atoms. The rubber may include a diene termonomer. The blend may include either or both of an amorphous non-elastomeric propylene polymer and a naphthenic or paraffinic extender oil.

US-A-4.036,912 discloses thermoplastic polymer blends of specific ethylene/propylene copolymers or ethylene/propylene/diene (EPDM) terpolymers with a crystalline polypropylene polymer.

GB-A-1,180,281 discloses compounds cf a rubbery ethylene/propylene copolymer or EPDM terpolymer with a hexane-soluble polypropylene or hexane-soluble propylene/alpha-olefin block polymer.

US-A-3,851,411 discloses footwear having a counter embodied in the heel portion of the upper. The counter is a thermoplastic article made from a blend of a monoolefin copolymer rubber and a polyolefin plastic. The counter adds stiffness at the heel and supplies frictional engagement with the heel of the wearer to help maintain the shoe in place on the wearer's foot. The rubber may be a terpolymer such as an ethylene/prapylene/ diene monomer rubber.

EP-A-0,779,333 discloses an uncrosslinked, nonflammable, oil-extended thermoplastic elastomer composition. The composition comprises a rubbery ethylene/alpha-olefin copolymer, a polypropylene resin, low density polyethylene, mineral oil and a melamine-coated ammonium polyphosphate. The composition may be used to fabricate skins for automotive interior trim.

### SUMMARY OF THE INVENTION

One aspect of this invention is an elastomeric composition consisting essentially of:
a. from 20 to 50 parts by weight (pbw), based upon combined weight of a and b, of a CPO having a melt flow rate, determined at a temperature of 230°C with a 2·16 kg weight, of at least 35 g/10minutes and which is selected from the group consisting of polypropylene (PP) homopolymers and propylene/ethylene (P/E) copolymers ;
b. from 80 to 50 pbw, based upon combined weight of a and b, of an elastomeric EAO polymer, the polymer optionally having polymerized therein a diene monomer;
c. from 1 to 200 pbw, per 100 pbw of EAO polymer, of a plasticizer, the plasticizer being selected from the group consisting of hydrocarbon oils and alkyl esters of a carboxylic acid; and, optionally,
d. from 0 to 40 pbw, per 100 pbw of a and b, of a material that provides an increase in Wet COF as measured in accordance with ASTM D-1894 using wet quarry tile over the wet coefficient of friction of a composition including only a, b and c and optionally C a filler in an amount within a range of from 0 to 70 parts by weight, based on combined weight of a and b, the filler being selected from the group consisting of glass, silica, carbon black, metal carbonates, metal sulfates, metal oxides, talc, clay and graphite fibers, the composition being substantially free of crosslinking or insoluble gels, the ethylene/alpha-olefin polymer having a viscosity, measured at a temperature of 200°C and at a Shearrate of 200 sec⁻¹, that is at least nine times greater than that of the crystalline polyolefin.

The elastomeric composition preferably has the CPO and the EAO polymer present as two distinct phases. More preferably, the CPO phase is at least co-continuous with the EAO polymer phase. The composition desirably has an abrasion resistance (ASTM D 1630-83. NBS Abrader) that is greater than (>) that of a like composition prepared from the same components, but with a single continuous phase formed from the EAO polymer.

All ranges specified in this application include both endpoints unless otherwise noted.

A second aspect of this invention is a process for preparing the elastomeric composition of the first aspect, the process comprising subjecting a combination of: a 20-50 pbw, based upon combined weight of a an b, of a CPO having a melt flow rate, determined at a temperature of 230°C with a 2·16 kg weight of at least 35 g/10min, and which is selected from the group consisting of polypropylene homopolymers and propylene/ethylene copolymers: b. 80-50 pbw, based upon combined weight of a and b, of an elastomeric EAO polymer, the EAO polymer optionally having polymerized therein a diene monomer; c. 1-200 pbw, per 100 pbw of elastomeric EAO polymer, of a plasticizer, the plasticizer being selected from the group consisting of hydrocarbon oils and alkyl esters of a carboxylic acid; and, optionally, d. from 0-40 pbw, per 100 pbw of a and b, of a material that provides an increase in Wet COF as measured in accordance with ASTM D-1894 using wet quarry tile over the wet coefficient of friction of a composition including only a, b and c, to conditions of temperature, shear and pressure sufficient to form a two phase blend composition wherein the crystalline polyolefin is at least a co-continuous phase with the EAO polymer phase, the composition being substantially free of crosslinking or insoluble gels , the ethylene/alpha-olefin polymer having a viscosity, measured at a temperature of 200°C and at a shear rate of 200 sec⁻¹, that is at least nine times greater than that of the crystalline polyolefin.

The second aspect has two related aspects of interest. In one, the combination includes the COFE material in an amount sufficient to improve the Wet COF of the resulting two phase blend composition relative to the Wet COF of a like combination save for the absence of the COFE material. In another, a and b are subjected to conditions of temperature, shear and pressure sufficient to form a first melt blended composition after which the first melt blended composition and c are subjected to conditions of temperature, shear and pressure sufficient to form the two phase blend composition, the two phase composition having a Wet COF > that of a two phase composition formed by subjecting a combination of a, b and c to a single iteration of the conditions of temperature, shear and pressure. The conditions used to form the first melt blended composition and the conditions used to form the two phase composition from the first melt blended composition are preferably the same.

A third aspect of this invention is an article of manufacture having at least one component thereof fabricated from the composition of the first aspect of the invention. The compositions suitably include at least one filler material. The paragraph following the "Brief Description of the Drawings" contains a partial listing of suitable articles of manufacture.

### BRIEF DESCRIPTION OF THE DRAWINGS

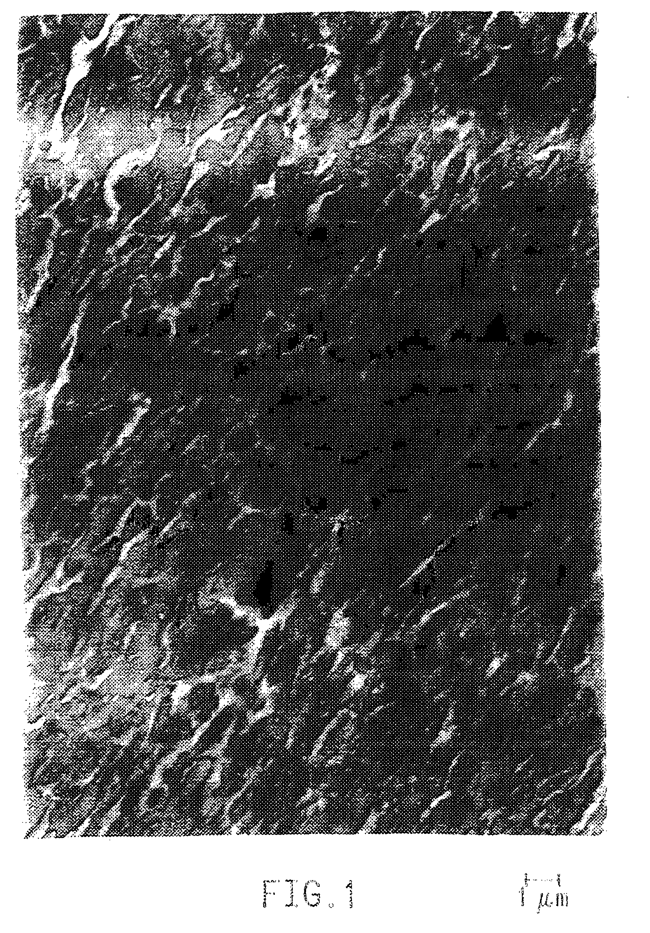

Figure 1 is a Transmission Electron Micrograph (TEM), taken at a magnification of 7,500 X, of the composition of Comparative Example (Comp Ex) B showing that PP, the light colored material, is a discontinuous phase and that ethylene/propylene/diene monomer (EPDM), the dark colored material, is a continuous phase. The scale at the bottom of the micrograph represents one micrometer.

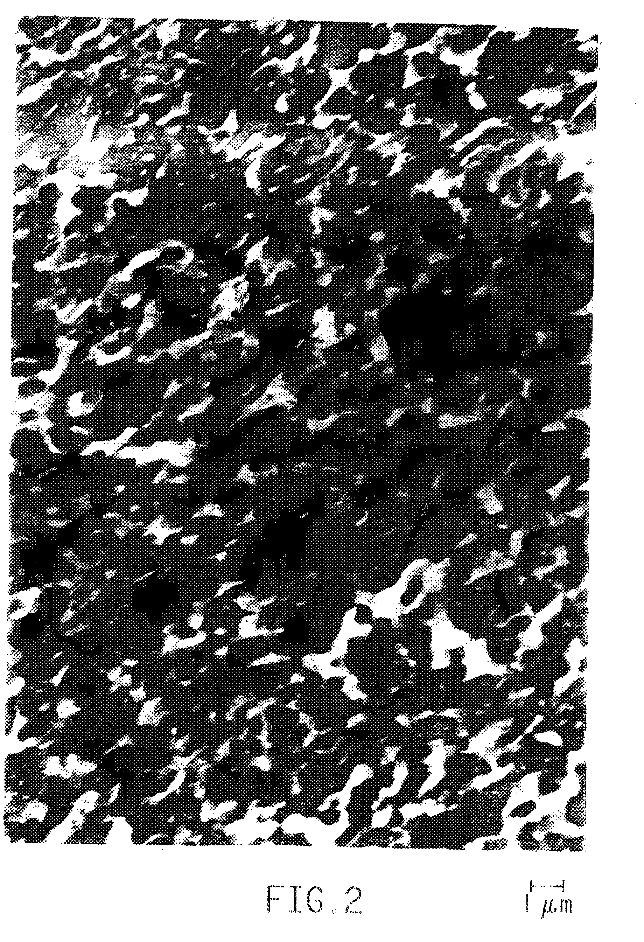

Figure 2 is a TEM, taken at a magnification of 7,500 X, of the composition of Example (Ex) 4 showing that the light and dark colored materials, respectively PP and EPDM, are present at least as co-continuous phases.

### DESCRIPTION OF PREFERRED EMBODIMENTS

The compositions of this invention can be formed into a variety of shaped articles using conventional polymer fabrication processes such as those identified above. The compositions are particularly suitable for use in fabricating injection molded rubber components, such as footwear outsoles or unit soles, and extruded sheet and profile shaped goods, such as gaskets and weather sealing devices. A partial, far from exhaustive listing of suitable shaped articles includes automobile body parts such as bumper fascia, body side moldings, exterior trim, interior trim, air dams, air ducts, wheel covers and instrument panel skins, and non-automotive applications such as polymer films, polymer sheets, trash cans, storage containers, lawn furniture strips or webbing, lawn mower and other garden appliance parts, recreational vehicle parts, golf cart parts, utility cart parts and water craft parts. The compositions can also be used in roofing applications such as roofing membranes. The compositions can further be used in fabricating components of footwear such as a shaft or an outer sole or both for a boot, particularly an industrial work boot. If the compositions contain a COFE material that provides an increase in Wet COF or are subjected to process conditions sufficient to provide an increase in Wet COF or both, they are particularly suitable for applications such as certain tubing, industrial boot soles, grips for sporting goods, and automotive thermoplastic polyolefin (TPO) and thermoplastic polyolefin vulcanizate (TPV) applications such as door handles, steering wheels and arm rests. The latter compositions may also be quite useful where articles fabricated therefrom are to be painted. A skilled artisan can readily augment this list without undue experimentation.

The elastomeric compositions of this invention are substantially free of crosslinking and comprise a CPO, an elastomeric EAO polymer, a plasticizer and, optionally, a COFE material. In the absence of crosslinking or curing, the elastomeric compositions should be substantially free of insoluble gels of the type referred to above by W. K. Fischer. The compositions desirably have an EAO polymer content that is within a range of from 50-80 pbw and a crystalline polyolefin content that is within a range of from 50-20 pbw, both percentages being based on combined weight of EAO polymer and CPO. The amounts are preferably from 60-80 pbw EAO and from 40-20 pbw CPO. The amounts are chosen to total 100 pbw. The compositions also comprise from 1-200 pbw, preferably from 50-150 pbw, per 100 pbw of EAO polymer, of a plasticizer.

EAO polymers (also referred to as "ethylene polymers") that are suitable for this invention include interpolymers and diene modified interpolymers. Illustrative polymers include ethylene/propylene (EP) copolymers, ethylene/butylene (EB) copolymers, ethylene/octene (EO) copolymers and ethylene/α-olefin/diene monomer (EAODM) interpolymers such as ethylene/propylene/diene monomer (EPDM) interpolymers. More specific examples include homogeneously branched, linear EAO copolymers (e.g. Tafmer™ by Mitsui Petrochemicals Company Limited and Exact™ by Exxon Chemical Company), homogeneously branched, substantially linear EAO polymers (e.g. the Affinity™ polymers available from The Dow Chemical Company and Engage® polyolefin elastomers available from DuPont Dow Elastomers L.L.C., and Nordel® and Nordel® IP hydrocarbon rubbers (EPDM interpolymers) available from DuPont Dow Elastomers L.L.C.

The more preferred EAO polymers are those with a density (measured in accordance with ASTM D-792) of 0.85-0.88 g/cc, especially 0.85-0.87 g/cc. The EAO polymer desirably has at least one of (a) a viscosity, measured at a temperature of 200°C and at a shear rate of 200 sec⁻¹, that is at least nine times greater than that of the crystalline polyolefin, (b) a Mooney viscosity (ML₁₊₄ at 125° C) of at least (≥) 20, and (c) a molecular weight distribution (M_{w}/Mₙ) ≥ 2.0. The M_{w/}Mₙ of is preferably from 2-5, more preferably from 2-4. The Mooney viscosity is preferably ≥ 50 and more preferably ≥ 70. An upper Mooney viscosity limit is pegged, not by an absolute number, but by processing limits inherent in equipment used to prepare compositions of the present invention.

"Substantially linear" means that a polymer has a backbone substituted with from 0.01-3 long-chain branches per 1000 carbons in the backbone.

"Long-chain branching" or "LCB" means a chain length that exceeds that of a short chain that results from incorporation of an α-olefin into the backbone of an EAO polymer or EAO polymer blend. Although carbon-13 nuclear magnetic resonance (C¹³ NMR) spectroscopy cannot distinguish or determine an actual number of carbon atoms in the chain if the length is greater than six carbon atoms, the presence of LCB can be determined, or at least estimated, from EAO polymer MWD. It can also be determined from a melt flow ratio (MFR) or ratio (I₁₀/I₂) of melt index (I₁₀) via ASTM D-1238 (190°C, 10-kg weight) to I₂.

"Interpolymer" refers to a polymer having polymerized therein at least two monomers. It includes, without limitation, copolymers, terpolymers and tetrapolymers. It particularly includes a polymer prepared by polymerizing ethylene with at least one comonomer, typically an α-olefin of 3-20 carbon atoms (C₃-C₂₀), and preferably 3-10 carbon atoms (C₃-C₁₀). Examples of suitable α-olefins include propylene, 1-butene, 1-hexene, 4-methyl-1-pentene, 1-heptene, 1-octene and styrene. Preferred copolymers include EP, EB, ethylene/hexene-1 (EH) and EO polymers. Illustrative terpolymers include an ethylene/propylene/octene terpolymer as well as terpolymers of ethylene, a C₃-C₂₀ α-olefin and a nonconjugated diene monomer. The nonconjugated diene monomer may have either one polymerizable double bond as in 5-ethylidene-2-norbornene (ENB) or two polymerizable double bonds as in norbornadiene (NBD). The diene monomer is preferably selected from the group consisting of NBD, dicyclopentadiene, 1,4-hexadiene, piperylene, ENB and mixtures thereof. A tetrapolymer results from a choice of more than one C₃-C₂₀ α-olefin or more than one nonconjugated diene monomer. Skilled artisans can readily select appropriate monomer combinations for any desired interpolymer.

"Elastomeric", as used herein, means an EAO polymer that has a density that is beneficially less than (<) 0.910 g/cc (grams per cubic centimeter), desirably < 0.900 g/cc, preferably < 0.895 g/cc, more preferably < 0.880 g/cc, still more preferably 0.850-0.880 g/cc, even more preferably 0.850-0.870 g/cc and a percent crystallinity < 33%, preferably < 29% and more preferably < 23%. The density is preferably greater than (>) 0.850 g/cc. Percent crystallinity is determined by differential scanning calorimetry (DSC).

SLEPs are characterized by narrow MWD and narrow short chain branching distribution (SCBD) and may be prepared as described in United States Patent (USP) 5,272,236 and 5,278,272, relevant portions of both being incorporated herein by reference. The SLEPs exhibit outstanding physical properties by virtue of their narrow MWD and narrow SCBD coupled with LCB.

USP 5,272,236 (column 5, line 67 through column 6, line 28) describes SLEP production via a continuous controlled polymerization process using at least one reactor, but allows for multiple reactors, at a polymerization temperature and pressure sufficient to produce a SLEP having desired properties. Polymerization preferably occurs via a solution polymerization process at a temperature of from 20°C-250°C, using constrained geometry catalyst (CGC) technology. Suitable CGCs are disclosed at column 6, line 29 through column 13, line 50 of USP 5,272,236.

A preferred SLEP has a number of distinct characteristics, one of which is an ethylene content of 20-90 weight percent (wt%), more preferably 30-80 wt%, with the balance comprising one or more comonomers. The ethylene and comonomer contents are based on SLEP weight and selected to attain a total monomer content of 100 wt%.

Additional distinct SLEP characteristics include melt index (I₂) (ASTM D-1238, condition 190°C, 2.16 kilogram (kg) weight (formerly Condition E)) and MFR or I₁₀/I₂. The interpolymers desirably have an I₂ of 0.01-30 g/10 min, more preferably 0.01-10 g/10 min. The SLEP also has an I₁₀/I₂ (ASTM D-1238) ≥ 5.63, preferably 6.5-15, more preferably 7-10. For a SLEP, the I₁₀/I₂ ratio serves as an indication of the degree of LCB such that a larger I₁₀/I₂ ratio equates to a higher degree of LCB in the polymer.

SLEPs that meet the aforementioned criteria include, for example, ENGAGE® polyolefin elastomers and other polymers produced with a CGC by The Dow Chemical Company and DuPont Dow Elastomers L.L.C.

Suitable CPOs include PP homopolymers and copolymers of propylene with an α-olefin such as ethylene, 1-butene, 1-hexene or 4-methyl-1-pentene or a blend of a homopolymer and a copolymer. The α-olefin is preferably ethylene. The copolymer may be a random copolymer or a block copolymer or a blend of a random copolymer and a block copolymer. As such, this component is preferably selected from the group consisting of PP homopolymers and P/E copolymers. This component has at least one of (a) a MFR (230°C and 2.16 kg weight) of at least 12 g/10 min, preferably ≥ 20 g/10 min and (b) a M_{w}/Mₙ ≥ 2.0. An upper MFR limit is 200 g/10 min.

Preparation of PP homopolymers and P/E copolymers also involves the use of Ziegler catalysts such as a titanium trichloride in combination with aluminum diethylmonochloride, as described by Cecchin, USP 4,177,160. Polymerization processes used to produce PP include the slurry process, which is run at 50-90°C and 0.5-1.5 MPa (5-15 atm), and both the gas-phase and liquid-monomer processes in which extra care must be given to the removal of amorphous polymer. Ethylene may be added to the reaction to form a polypropylene with ethylene blocks. PP resins may also be prepared by using any of a variety of metallocene, single site and constrained geometry catalysts together with their associated processes.

Plasticizers suitable for use in preparing compositions of the present invention are suitably selected from the group consisting of hydrocarbon oils and alkyl esters of a carboxylic acid. The hydrocarbon oils are preferably selected from naphthenic oils and paraffinic oils. The alkyl groups desirably contain from 6-30 carbon atoms. Carboxylic acids suitable for use in preparing the esters contain from 1-4 carboxylic acid carbon atoms. Illustrative esters include dioctylazealate, dioctylsebacate and n-butyltallate.

The plasticizer is present in an amount of 1-200 pbw, based upon 100 pbw of elastomeric EAO polymer. The amount is desirably 20-200 pbw, preferably 50-150 pbw.

The compositions of the present invention optionally contain a COFE material that enhances Wet COF. The material, also referred to as a "Wet COFE material", is (a) selected from the group consisting of conventional tackifiers and low molecular weight, low crystallinity polymers, low molecular weight propylene copolymers, and (b) present in an amount greater than 0 pbw. Suitable low MW, low crystallinity polymers include EAO polymers, especially EO copolymers.

When used, the amount of COFE material is desirably from > 0 to 40 pbw, per 100 pbw of combined weight of CPO and elastomeric EAO polymer. The amount is preferably from > 0 to 30 pbw, more preferably from > 0 to 20 pbw.

When the wet COFE material is a low molecular weight, low crystallinity polymer, the amount is sufficient to impart improved processibility to the composition. Improved processibility is determined by a reduction in peak injection molding pressure, relative to a composition that is (1) subjected to the same processing conditions and (2) identical save for the absence of the COFE material.

The low MW, low crystallinity polymers also have distinguishing characteristics. A low MW is a weight average molecular weight (M_{w}) of 500-25,000. The M_{w} is desirably 500-20,000 and preferably 500-15,000. Crystallinity is regarded as low when it is < 20%, preferably from 0 to 15% and more preferably from 0 to 10%. The low MW polymers also suitably have a T_{g} within a range of from -40 to -65°C.

The low MW, low crystallinity polymers, when present in compositions of the present invention as a COFE material, provide an unexpected benefit in terms of improving processibility of such compositions. One means of demonstrating improved processibility is to compare peak injection molding pressures of compositions that differ only in the presence or absence of a low MW, low crystallinity polymer as a COFE material. The composition that contains an amount of such a polymer sufficient to improve the compositions wet COF also has a lower peak injection pressure than the composition lacking that polymer. Substituting a composition of the second related aspect of the second aspect for the composition containing the COFE material can make a similar comparison.

EAO polymers that have a bimodal or multimodal MWD are also effective as COFE materials as long as they have a low MW fraction that meets the aforementioned distinguishing characteristics. As the low MW fraction is believed to provide the COF enhancement, skilled artisans will understand that a larger amount of a bimodal or multimodal EAO polymer must be used to attain a comparable effect to a low MW EAO polymer.

"Tackifier", as used herein, is a generic term for any of several hydrocarbon-based compositions often used to impart tack to a hot melt adhesive composition. Some tackifiers can also have a polar component. Illustrative tackifiers include aliphatic C₅ resins, polyterpene resins, hydrogenated resins, mixed aliphatic and aromatic resins, hydrogenated mixed aliphatic and aromatic resins, rosin esters, and hydrogenated rosin esters. A tackifier typically has a viscosity at 350° Farenheit (°F) (177°C), as measured using a Brookfield viscometer, of no more than 300 centipoise (0.3 pascal-second) and a glass transition temperature (T_{g}) > 25°C. The T_{g} is preferably within a range of 25°C-120°C, more preferably 40°C-100°C.

Commercially available conventional tackifiers include aliphatic resins (AdTac®, Piccotac®, and Piccopale® (Hercules Inc.)), aliphatic/aromatic resins (Hercotac® and Piccolyte® (Hercules, Inc.)), pure monomer resins (Endex®, Piccolastic®, Piccotex® and Kristalex® (Hercules, Inc.)), light colored resins, both aliphatic and aromatic (Hercolite®, Hercules Inc.), hydrogenated pure aromatic resins (Regalrez®, Hercules, Inc.), hydrogenated mixed aromatic resins (Regalite®, Hercules, Inc.), aromatic resins (Picco®. Piccodiene®, Piccovar® AP and Piccovar® L (Hercules, Inc.)), polyterpene resins (Piccolyte® A, Piccolyte® C and Piccolyte® S (Hercules, Inc.)), Ester resins (Foral®, Hercules, Inc.), the Escorez® line of tackifiers (Exxon Chemical) and the Wingtack® line of tackifiers (Eastman Chemical). The foregoing list is solely for illustration and is not to be considered an exhaustive listing. Skilled artisans can readily select other tackifiers.

COF enhancement, particularly wet COF enhancement, occurs when a compound plus a COFE material has a greater Wet COF than that of the compound alone.

A Wet COF of 0.4 or more is particularly desirable for certain applications such as industrial and work boot soles. A Wet COF of 0.3 or greater, especially 0.35 or greater provides very satisfactory results for other applications such as equipment grips for golf clubs, tennis racquets, racquetball racquets and other sporting goods.

The compositions of this invention may be compounded with a filler (reinforcing, non-reinforcing or both) in an amount of from 0-70 pbw, based upon 100 parts combined weight of EAO polymer and CPO. In addition, a pigment may also be added. Suitable fillers and reinforcing agents include glass, silica, carbon black, metal carbonates such as calcium carbonate, metal sulfates such as calcium sulfate, metal oxides such as magnesium oxide and zinc oxide, talc, clay, and graphite fibers.

A variety of conventional, specialty additives may be advantageously used in compositions of this invention. The additives include antioxidants, surface tension modifiers, antiblock agents, lubricants, antimicrobial agents such as organometallics, isothtazolones, organosulfurs and mercaptans; antioxidants such as phenolics, secondary amines, phophites and thioesters; antistatic agents such as quaternary ammonium compounds, amines, and ethoxylated, propoxylated or glycerol compounds; hydrolytic stabilizers; lubricants such as fatty acids, fatty alcohols, esters, fatty amides, metallic stearates, paraffinic and microcrystalline waxes, silicones and orthophosphoric acid esters; mold release agents such as fine-particle or powdered solids, soaps, waxes, silicones, polyglycols and complex esters such as trimethylolpropane tristearate or pentaerythritol tetrastearate; pigments, dyes and colorants; plasticizers such as esters of dibasic acids (or their anhydrides) with monohydric alcohols such as o-phthalates, adipates and benzoates; heat stabilizers such as organotin mercaptides, an octyl ester of thioglycolic acid and a barium or cadmium carboxylate; ultraviolet light stabilizers used as a hindered amine, an o-hydroxy-phenylbenzotriazole, a 2-hydroxy,4-alkoxyenzophenone, a salicylate, a cynoacrylate, a nickel chelate and a benzylidene malonate and oxalanilide. A preferred hindered phenolic antioxidant is Irganox™ 1076 (Ciba-Geigy Corp). Each of the above additives, if used, typically does not exceed 5 wt%, based on total composition weight.

The compositions of this invention may be fabricated into parts, sheets or other form using any one of a number of conventional procedures for processing elastomers. The compositions can also be formed, drawn into films, multilayer laminates or extruded sheets, or can be compounded with one or more organic or inorganic substances, on any machine suitable for such purposes.

The elastomeric compositions of this invention have either a continuous or co-continuous phase formed from the CPO. The compositions that lack a COFE material or process related Wet COF enhancement have surprisingly improved properties, particularly abrasion resistance (ASTM D 1630-83, NBS Abrader), relative to compositions prepared from the same components, but with an EAO continuous phase.

The addition of a COFE material to a composition results in some loss of abrasion resistance relative to that of the composition with no COFE material. Similarly, elastomeric compositions that have an improved Wet COF as a result of certain process conditions also suffer some loss of abrasion resistance. Surprisingly, however, stitch tear strength (measured in pounds per linear inch (pli) in accordance with Footwear Institute of America test method number FIA-326) is not adversely affected by such process conditions.

Preparing elastomeric compositions of the present invention comprises subjecting a combination of a CPO, an elastomeric EAO, a plasticizer and, optionally, a COFE material to conditions of temperature shear and pressure sufficient to form a two phase blend composition. The CPO, EAO, plasticizer and COFE material as well as the amounts of each are all as described above. The CPO and EAO each form a phase. The CPO phase of the two phase blend is at least co-continuous with the EAO polymer phase. The conditions of temperature, shear and, to a lesser extent, pressure are sufficient to convert both the CPO and EAO to a melt state and at least partially intermix the CPO and the EAO in their melt states. While any conventional melt processing apparatus may be used, extruders, especially twin screw extruders, provide desired results.

Skilled artisans recognize that the conditions of temperature, shear, and pressure vary from one melt processing apparatus to another. For example, when using a 30 mm twin screw extruder rather than a 90 mm twin screw extruder, barrel temperature settings and extruder screw rpm settings must be higher in the 30 mm extruder than in the 90 mm extruder to attain equivalent results. A skilled artisan can readily determine satisfactory variations of such settings without undue experimentation. The examples and comparative examples presented below can be used as a guide for such a determination.

A process variation that allows one to prepare a two phase blend composition with an enhanced Wet COF without using a COFE material comprises two stages. In stage one, the EAO and CPO are subjected to conditions of temperature, shear and pressure sufficient to form a first melt blended composition. The composition may be recovered, converted to pellets or another suitable feed form and then fed, in stage two, to a second melt processing apparatus where it is returned to a melt state. An alternate stage two allows the composition to be fed directly to the second melt processing apparatus, without an intermediate recovery step, and maintained in a melt state. In either case, plasticizer is added to the first melt blended composition while it traverses the second apparatus in a melt state. With this process variation, the resulting two phase has a Wet COF that exceeds that of a two phase composition prepared by subjecting the CPO, EAO and plasticizer to a single pass through the same melt processing apparatus.

The process variation desirably uses the same combination of temperature, shear and, where appropriate, pressure in each apparatus where the apparatus are substantially identical. One combination of conditions for a 30 mm twin screw extruder is an extruder screw speed of 400 rpm and barrel temperature settings sufficient to provide a polymer melt temperature ≥ 330°C. As noted above, changes in apparatus type and size require an adjustment of operating parameters.

Identification of a phase as continuous or co-continuous can readily be accomplished via TEM. This technique involves cryogenic microtome sectioning of a sample. The microtomed surface of the sample is then stained (exposed to vapor) using a 0.5 wt% aqueous solution of ruthenium tetraoxide. The sample is then examined and photographed using a TEM (JEOL 2000Fx). The magnification is typically set for ≥ 7,500 X.

The examples presented below demonstrate the improved abrasion resistance of compositions representing the present invention. The elastomeric compositions also have improved hot green strength (also known as "mold solidification"), as measured by Dynamic Mechanical Spectroscopy ("DMS"). relative to formulated polyvinyl chloride and styrene block copolymers. It is believed that compositions of the present invention also provide improved thermo-mechanical properties at elevated temperatures (e.g., 100-120° C), such as deformation under load tests and other thermo-mechanical analyses.

The following examples illustrate but do not, either explicitly or implicitly, limit the present invention. Unless otherwise stated, all parts and percentages are by weight, on a total weight basis. Arabic numerals identify Examples (Ex) of the present invention and letters of the alphabet represent comparative examples (Comp Ex) .

Table I below provides physical property data for several materials used to prepare compositions for a number of Ex and Comp Ex. EAO-1 through EAO-6 are prepared by or available from DuPont Dow Elastomers L.L.C. and EAO-7 and EAO-8 are available from The Dow Chemical Company.

EAO-1 is an EO polymer (Engage® 8180) having an I₂ of 0.5 g/10 min and a density of 0.863 g/cc. EAO-2 is a developmental ethylene/propylene/ethylidene norbomene (ENB) polymer having an ENB content of 0.5%. EAO-3 is a developmental ethylene/propylene/ENB polymer having an ENB content of 0.5%. EAO-4 is an ethylene/propylene/ 1,4-hexadiene polymer (Nordel® 2470) having a 1,4-hexadiene content of 6.0%. EAO-5 is an experimental EO copolymer that has a Mooney viscosity (ML₁₊₄, 125°C) of 70 and a density of 0.87 g/cc. EAO-6 is a polyolefin elastomer (POE) (Engage® 8842) having an I₂ of 1 g/10 min and a density of 0.858 g/cc. EAO-7 is a linear low density polyethylene (LLDPE) (Dowlex® IP-90). EAO-8 is also LLDPE (Dowlex® IP 60).

PP-1 is a PP homopolymer (Profax® 6323, Himont). PP-2 is a PP homopolymer (PD 701, Himont). PP-3 is a PP homopolymer (Valtec® HH 444, Himont).

Pl-1 is a high viscosity paraffinic oil (Sunpar® 2280, Sun Oil Co.) Pl-2 is low viscosity paraffinic oil (Tufflo® 10, Lyondell Co.). Fi-1 is surface treated, calcined kaolin clay filler (Translink® 37, Engelhard).

Viscosity (visc) values, in poise, are determined from log shear rate versus log viscosity curves as generated by dynamic mechanical spectroscopy using an instrument such as those available from Rheometric Instruments. The viscosity values shown in Table I are determined at 200 sec⁻¹ by extrapolation from the log shear rate versus log viscosity curves at 200°C using 25 millimeter (mm) parallel plates. The Mooney viscosity (MV) (ML₁₊₄ at 125°C for the EAO polymers and the melt flow rate (MFR) (g/10 min) at 230°C with a 2.16 kg weight for the PP polymers help characterize starting materials.

**Table I**

| Component/ Property | MWD | MV | MFR (g/10 min) | Visc (poise) |
|---|---|---|---|---|
| EAO-1 | 2.1 | 25 | -- | 14000 |
| EAO-2 | 2.2 | 26 | -- | 17000 |
| EAO-3 | 4.3 | 70 | -- | 21000 |
| EAO-4 | 3.5 | 70 | -- | 21000 |
| EAO-5 | 2.02 | 70 | -- | 21000 |
| PP-1 | 3.4 | -- | 12 | 3000 |
| PP-2 | 3.6 | -- | 35 | 1900 |
| PP-3 | -- | -- | 70 | 1300 |
| -- means not measured | | | | |

### EX 1-7 AND COMP EX A AND B

Nine sample compositions (Ex 1-7 and Comp Ex A-B), are prepared from the compositions shown in Table II.

**Table II**

| Ex/ Comp Ex No. | EAO | | PP | | P1 | | Fi (wt%) | Viscosity Ratio |
|---|---|---|---|---|---|---|---|---|
| | ID | % | ID | % | ID | % | | |
| A | 1 | 41 | 1 | 21 | 1 | 38 | 0 | 6.1 |
| B | 2 | 41 | 1 | 21 | 1 | 38 | 0 | 7.4 |
| 1 | 1 | 42 | 3 | 23 | 1 | 35 | 0 | 11 |
| 2 | 2 | 42 | 3 | 23 | 1 | 35 | 0 | 13 |
| 3 | 2 | 42 | 2 | 23 | 1 | 35 | 0 | 9 |
| 4 | 3 | 42 | 2 | 23 | 1 | 35 | 0 | 11 |
| 5 | 3 | 44 | 2 | 18 | 2 | 37 | 1 | 11 |
| 6 | 4 | 43 | 2 | 19 | 2 | 37 | 1 | 11 |
| 7 | * | 42.35 | 2 | 15.7 | 2 | 41 | 0.95 | 11 |

| | | | | | | | | |
|---|---|---|---|---|---|---|---|---|
| * means a combination of 35.6% EAO-5, 5% EAO-6 and 1.75% EAO-8 | | | | | | | | |

Ex 1-4 and Comp Ex A-B are prepared on a small, laboratory scale Farrell Banbury Mixer. For each Ex and Comp Ex, the EAO polymer is added to the mixer at 130°C and melted at a rotor speed of 80 revolutions per minute (rpm) for two minutes. The plasticizer is then added, with continued mixing, over a period of two minutes. The PP polymers are then added to the mixer and the temperature is increased by addition of steam coupled with an increase in rotor speed to 180 rpm. After four minutes, the contents of the mixer are removed, roll milled into a sheet and then granulated for injection molding of test specimens.

Ex 5 and 6 are prepared using a ZSK 30 mm Werner and Pfleiderer co-rotating twin screw extruder. The EAO polymer, the PP polymer and the filler are dry blended in a tumble blender before being added to the extruder using a calibrated feeder. The extruder operates at a speed of 200 rpm to effectively melt process the dry pellets and provides a die pressure of 300 pounds per square inch (psi) (2070 kilopascals (kPa)). Zones 1 -5 are set, respectively, at 140°C, 110°C, 170°C, 180°C and 190°C and the extruder die is set at 190°C. The plasticizer is added to zone 2 of the extruder using a calibrated pump and injection nozzle. Extrudate passes from the extruder through a double strand die into a water bath ( 13°C) where it is quenched. The extrudate exits the water bath, is dried with an air knife and then pelletized.

Ex 7 is prepared using the same apparatus as in Ex 5 and 6, but with the extruder operating at 240 rpm rather than 200 rpm and with different temperature settings. For a first pass through the extruder, during which no plasticizer is added, the temperature settings for Zones 1-5 are, respectively, 150°C, 165°C, 185°C, 185°C and 185°C and the extruder die is set at 180°C. For a second pass through the extruder, during which plasticizer is added to zone 2, all temperatures are set at 175°C. Following the second pass, the extrudate is processed as in Ex 5-6.

The compositions prepared for Ex 1-7 and Comp Ex A-B are converted into injection molded test specimens or plaques having an area of 154.8 square centimeters (cm²) and a thickness of 0.312 cm. The plaques are produced using an Arburg Model 370C-800-225 (800 kilonewton (kN) hydraulic clamping force) reciprocating screw injection molding machine (30 mm screw) with barrel temperatures set in a profiled fashion with a first barrel zone at 121°C, subsequent zones sequentially at 177°C, 196°C and 204°C, and a nozzle set at 185°C. A plaque mold temperature, while set at 18°C, is typically 21°C during molding. The screw angular velocity, injection pressure and hold pressure are, respectively, 30 meters/minute, 400-700 bar (40-70 megapascals (MPa)) and 30 bar (3 MPa). A shot volume of 80 cc is targeted for each plaque over an injection time of 1.9-2.1 seconds. Mold cooling time is 20-30 seconds.

The specimens are subjected to physical property testing to determine NBS Abrasion Resistance (ASTM D-1630), tensile strength at break (psi/kPa) and percent (%) elongation at break. The physical property data are shown in Table II below. For purposes of comparison, a crosslinked rubber (NBS reference material) has an NBS abrasion value of 100.

**Table III**

| Ex/Comp Ex | Viscosity Ratio | NBS Abrasion Value | Tensile at Break (psi/MPa) | Elongation at Break (%) |
|---|---|---|---|---|
| A | 6.1 | 33 | 900/6.2 | 820 |
| B | 7.4 | 38 | 780/5.4 | 640 |
| 1 | 11 | 81 | 940/6.5 | 730 |
| 2 | 13 | 88 | 660/4.6 | 510 |
| 3 | 9 | 98 | 740/5.1 | 610 |
| 4 | 11 | 117 | 750/5.2 | 530 |
| 5 | 11 | 121 | 660/4.6 | 670 |
| 6 | 11 | 118 | 590/4.1 | 560 |
| 7 | 11 | 92 | 670 | 680 |
| Reference | N/A | 100 | N/A | N/A |

The data presented in Table III demonstrate that compositions with viscosity ratios of 9 or greater have superior abrasion resistance relative to similar compositions with lower viscosity ratios. *See, e.g*., Comp Ex A versus Ex 1. Similar results are expected with other EAO polymers, CPOs, plasticizers and, where appropriate, additives such as fillers, pigments. stabilizers, all of which are disclosed above.

Hot green strength data can be illustrated by determining storage modulus of a composition at a temperature of 130° C (8 mm parallel plates) using a DMS from Rheometric Scientific. The storage modulus for Ex 6 is 798,000 dynes/square centimeter (dynes/cm²) (8137 kilograms/square meter (kg/m²)). The storage modulus for a polyvinyl chloride composition, a styrene block copolymer composition, both typically used in fabricating boot shafts, and Comp Ex A are, respectively, 598,000 dynes/cm² (6098 kg/m²), 173,000 dynes/cm² (1764 kg/m²), and less than 5,000 dynes/cm² (51 kg/m²). These data show that the compositions of the present invention compare very favorably to commercially available materials and provide a marked improvement over similar compositions with a lower viscosity ratio. Similar results are expected with other compositions that represent the present invention.

### EX 8-12 AND COMP EX C

Ex 8 and 9 are prepared using the procedure and apparatus of Ex 5-6, but with temperatures for zones 1 -5 and the extruder die set, respectively, at 140°C, 160°C. 165°C. 170°C. 165°C and 160°C. The compositions for Ex 8-9 are shown in Table IV below. A Haake 9000 twin screw extruder equipped with a chilled water bath is used to prepare Ex 10-12. Zones 1-5 and 6 (the extruder die) are set, respectively, at 140°C, 160°C, 170°C, 170°C, 160°C and 150°C. Ex 10 and 11 are, respectively, combinations of 100 pbw of the compositions of Ex 8 and 9 with 10 pbw of COFE-1. Ex 12 is a combination of 100 pbw of the composition of Ex 8 and 10 pbw of COFE-2. When present, the COFE compounds are dry blended with the compositions before they are melt processed using the extruder. Comp Ex C is injection molded as received.

Comp Ex C is a styrene-butadiene-styrene compound (SBS-1) sometimes used in footwear applications and being available from A-W Compounding Ltd. under the trade designation TR2046. COFE-1, used as a COF enhancing compound, is Regalite® S101, a tackifier (hydrogenated mixed aromatic resins) available from Hercules, Inc. COFE-2 is a developmental EO polymer (DuPont Dow Elastomers L.L.C.) that has a bimodal MWD (50% of a 200,000 M_{w} with a density of 0.867 g/cc and 50% of a 12,000 M_{w} with a density of 0.862 g/cc, with an overall density of 0.865 g/cc and a MI of 3.0 g/10 min).

**Table IV**

| Ex No/ Component | 8 | 9 |
|---|---|---|
| EAO-4 | 35.65 | 38.62 |
| EAO-6 | 5.0 | 5.42 |
| PP-2 | 15.68 | 17.01 |
| Fi-1 | 0.94 | 1.01 |
| EAO-7 | 1. 74 | 1.89 |
| P1-2 | 41.0 | 36.0 |

The compositions of Ex 8-12 and Comp Ex C are converted into injection molded test plaques using the procedure and apparatus of Ex 1-7.

Injection molding processibility is quantified during production of the test plaques. The shot size and screw position at which the process switches from injection to hold is adjusted at the highest injection velocity to be evaluated such that the cavity is barely full. The injection molding apparatus temperatures are feed temperature is 250°F (121°C) for zone 1 (feed zone), 350°F ( 177°C) for zone 2, 385°F ( 196°C) for Zone 3, 400°F (204°C) for Zone 4 and 385°F ( 196°C) for the nozzle. The time to fill the cavity to this point and the peak injection pressure are recorded at several injection velocities (5, 8, 10, 15, 20, 30, 50 and 70 cc/second). The peak injection pressure is plotted against the apparent shear rate (see Table VI) in the runner. The apparent shear rate is calculated using the injection velocity and mold physical dimensions. The peak injection pressure (see Table VI) that results from the set injection velocity is used as an indication of processibility since it is a process response dependent upon melt viscosity, injection velocity and the rate of solidification of the flow front.

Those skilled in the art of injection molding recognize that injection pressures are countered by clamp tonnage in a molding machine. They also recognize that unsuccessful injection molding resins will generate an injection pressure that exceeds available clamp tonnage prior to the mold cavity being filled at the highest practical melt temperature. When the peak pressure exceeds the clamp tonnage, flash occurs. As such, a compound that generates a significantly lower injection pressure at a given injection velocity (shear rate) than another resin is considered more processible.

The test plaques representing Ex 8-12 and Comp Ex C are subjected to physical property analysis and testing to determine wet and dry mason tile COF, NBS Abrasion Resistance, DIN Abrasion Resistance, Hardness (Shore A) and injection-mold viscosity at eight different shear rates. Coefficient of friction (COF) testing is done in accordance with ASTM D-1894 using mason tile (dry and wet). NBS Abrasion Resistance is determined as in Ex 1-7. DIN Abrasion (measurement of volume loss) is determined in accordance with test method DIN 53516. Hardness (Shore A) testing is done in accordance with ASTM D-2240. Physical property test data is summarized in Table V below.

**Table V**

| Ex No/ Property | 8 | 9 | 10 | 11 | 12 | C |
|---|---|---|---|---|---|---|
| Dry COF | 0.39 | 0.39 | 0.91 | 0.70 | 0.52 | 0.5 |
| Wet COF | 0.27 | 0.27 | 0.57 | 0.48 | 0.36 | 0.48 |
| NBS Abrasion | 90 | 99 | 56 | 74 | 77 | 76 |
| DIN Abrasion (mm³) | 144 | 133 | 238 | 184 | 159 | 293 |
| Hardness (Shore A) | 61 | 68 | 56 | 61 | 60 | 73 |

**Table VI**

| Ex/ Comp Ex | 8 | 9 | 10 | 11 | 12 | C |
|---|---|---|---|---|---|---|
| P (psi/MPa) @ 22289s⁻¹ | 9619 /66.3 | 10829 /74.7 | 7833 /54.0 | 8746 /60.3 | 9584 /66.1 | 8744 /60.3 |
| P (psi/MPa) @ 15921s⁻¹ | 7747 /53.4 | 8856/ 61.1 | 6290 /43.4 | 7174 /49.5 | 7629 /52.6 | 7186 /49.5 |
| P (psi/MPa) @ 9552 s⁻¹ | 6221 /42.9 | 7272/ 50.1 | 4982 /34.3 | 5777 /39.8 | 6130 /42.3 | 6246 /43.1 |
| P (psi/MPa) @ 6368 ^{s-1} | 5515 /38.0 | 6538/ 45.1 | 4364 /30.1 | 5189/35.8 | 5527 /38.1 | 5834 /40.2 |
| P (psi/MPa) @ 4776 s⁻¹ | 5170 /35.6 | 6134/ 42.3 | 4247 /29.3 | 4939 /34.1 | 5277 /36.4 | 5628 /38.8 |
| P (psi/MPa) @ 3184s⁻¹ | 4896 /33.8 | 5861/ 40.4 | 3997 /27.6 | 4762 /32.8 | 5101 /35.2 | 5628 /38.8 |
| P (psi/MPa) @ 2547 s⁻¹ | 4752 /32.8 | 5688/ 39.2 | -- | 4689 /32.3 | 4954 /34.2 | 5746 /39.6 |
| P (psi/MPa) @ 1592 ^{s-1} | 4466 /30.8 | 5602/ 38.6 | 3938 /27.2 | 4659 /32.1 | 4969 /34.3 | 6143 /42.4 |
| -- means not measured | | | | | | |

The data presented in Table V demonstrate that addition of a COFE compound increases the wet COF without any significant adverse effect upon remaining physical properties. COFE-2, which has only 50 wt% of a low molecular weight fraction, effectively provides 5 wt% of a COF enhancing compound. If the amount of COFE-2 is doubled, as shown in Ex 15, further improvements in wet COF are evident. If COFE-2 is substituted for at least a portion of EAO-6, still further improvements in wet COF are expected.

The data presented in Table VI demonstrate that the addition of a COFE compound does not adversely affect the mold flow characteristics of the compounds. This is surprising in that the addition of a COFE compound effectively reduces the relative amount of plasticizer. In Ex 10 and 11, the compositions containing a COFE material have improved flow characteristics relative, respectively, to Ex 8 and 9. As noted above, improved flow characteristics (improved processibility) are evident from a lower peak injection pressure during injection molding at the same injection velocities. In other words, some COFE-containing compounds are easier to injection mold than comparable compositions that lack a COFE compound.

### EX 13-17

Five additional examples are prepared using the apparatus and procedures outlined for Ex 10-12 for Ex 15-17 and the apparatus and procedures outlined in Ex 5-6 for Ex 13-14. Ex 13 and 14 replicate, respectively, Ex 10 and 11, but with 5 rather than 10 pbw of COFE-1 and 95 rather than 90 pbw of, respectively, the compositions of Ex 8 and 9. Ex 15 replicates Ex 12, but with 20 rather than 10 pbw COFE-2 and 80 rather than 90 pbw of the composition of Ex 8. Ex 16 and 17 replicate Ex 10, but with COFE-3 (Ex 16) or COFE-4 (Ex 17) rather than COFE-1. COFE-3 is an experimental, low MW (number average molecular weight (Mₙ) of 9200) EO copolymer (DuPont Dow Elastomers L.L.C.) that has a density of 0.870 g/cc and an effective MI of 1770 g/10 min. COFE-4 is Hercotac® 1148, a tackifier (mixture of petroleum derived monomers, naturally occurring monomers or both with a T_{g} of 44°C, a M_{w} of 1500 and a MWD of 1.9) available in pellet form from Hercules, Inc. Tables VII and VIII present, respectively, physical property test data for Ex 13-17 and peak injection pressure data for Ex 15-17. Although not shown, peak injection pressure data for Ex 13 are expected to be intermediate between the values presented above for Ex 8 and 10. Likewise the data for Ex 14 are expected to be intermediate between the values presented above for Ex 9 and 11.

**Table VII**

| Ex No/Property | 13 | 14 | 15 | 16 | 17 |
|---|---|---|---|---|---|
| Dry COF | 0.41 | 0.52 | 0.57 | 0.64 | 0.77 |
| Wet COF | 0.32 | 0.36 | 0.39 | 0.41 | 0.45 |
| NBS Abrasion | 86 | 102 | -- | -- | -- |
| DIN Abrasion (mm³) | 154 | 138 | -- | -- | -- |
| Hardness (Shore A) | 57 | 64 | 59 | 59 | 56 |
| -- means not determined | | | | | |

**Table VIII**

| Ex/Comp Ex | 15 | 16 | 17 |
|---|---|---|---|
| Temp (°F/°C) for P Test | 365/185 | 365/185 | 365/185 |
| P (psi/MPa) @ 22289 s⁻¹ | 10067/ 69.4 | 8524/ 58.8 | 8127/ 56.0 |
| P (psi/MPa) @ 15921 s⁻¹ | 7966/ 54,9 | 6790/ 46.8 | 6378/ 44.0 |
| P (psi/MPa) @ 9552 s⁻¹ | 6540/ 45.1 | 5437/ 37.5 | 5040/ 34.7 |
| P (psi/MPa) @ 6368 ^{s-1} | 5952/ 41.0 | 4952/ 34.1 | 4541/ 31.3 |
| P (psi/MPa) @ 4776 s⁻¹ | 5672/ 39.1 | 4688/ 32.3 | 4305/ 29.7 |
| P (psi/MPa) @ 3184 s⁻¹ | 5408/ 37.3 | 4364/ 30.1 | 4086/ 28.2 |
| P (psi/MPa) @ 2547 s⁻¹ | 5334/ 36.8 | 4306/ 29.7 | 4041/ 27.9 |
| P (psi/MPa) @ 1592 s⁻¹ | 5364/ 37.0 | 4262/ 29.4 | 3982/ 27.5 |

The data presented in Tables VII and VIII demonstrate the effectiveness of varying levels of tackifiers and different tackifiers in improving the wet COF of the polymer compositions of Ex 13-17. Certain tackifiers and amounts of tackifier provide greater COF enhancement than others do. Similar results are expected with other polymers, polymer compositions, tackifiers (whether conventional or a low MW polymer) and additives, all of which are disclosed above. Skilled artisans can readily select the appropriate compositions and tackifiers as well as the relative amounts of each component needed to attain a desired target wet COF.

### EX 18-19 AND COMP EX D

Two additional examples and one comparative example are prepared using a composition that includes 60.3% EAO-4, 26.6% PP-2, 8.5% EAO-6, 2.9% EAO-8, 1.6% Fi-1, and 0.1% Irganox® 1076 (hindered phenolic antioxidant, Ciba-Geigy Corp).

The composition is subjected to three different sets of process conditions. All use a 90 mm Berstorff twin screw extruder rather than the 30 mm twin screw extruder of Ex 5-6. Zones 1- 6, the screen changer body, the transition zone and the extruder die are set, respectively, at 490°F (254.4°C), 440°F (226.7°C), 545°F (285.0°C), 500°F (260.0°C), 400°F (204.4°C), 590°F (310.0°C). 420°F (215.6°C). 425°F (218.3°C), and 450°F (232.2°C). The extruder operates at 250 rpm, which, in combination with the above temperatures, effectively produces a polymer melt temperature of 430°F (221.1°C). A Gala underwater pelletizer converts molten polymer into pellets.

Comp Ex D represents the composition as processed through the extruder with no plasticizer addition. Ex 18 feeds the same composition into the extruder, but modifies the procedure used with Comp Ex D by injecting sufficient Pl-2 into Zone 3 to provide a finished product plasticizer content of 41%. Ex 19 adds the pellets of Comp Ex D to the extruder's feed throat and then injects into Zone 3 the same amount of plasticizer as in Ex 18.

The compositions of Ex 18-19 are converted into injection molded test plaques as in Ex 1-7 and subjected to physical property analysis as in Ex 8-12. Stitch tear strength is measured in pounds per linear inch (pli) in accordance with Footwear Institute of America test method number FIA-326. Physical property test data are summarized in Table IX below. Peak injection pressure data are determined as in Ex 8-12 for Ex 18-19 and Comp Ex D and shown in Table X below.

**Table IX**

| Ex No/Property | 18 | 19 |
|---|---|---|
| Dry COF (mason Tile) | 0.39 | 0.61 |
| Wet COF (mason Tile) | 0.27 | 0.43 |
| Dry COF (Varnished Wood) | 1.45 | 1.72 |
| Wet COF (Varnished Wood) | 0.91 | 1.45 |
| Dry COF (Vinyl Tile) | 1.48 | 1.77 |
| Wet COF (Vinyl Tile) | 1.32 | 1.59 |
| NBS Abrasion | 90 | 66 |
| DIN Abrasion (mm³) | 140 | 208 |
| Hardness (Shore A) | 61 | 59 |
| Melt Index (I₂) | 7 | 38 |
| Stitch Tear Strength (pli) | 192 | 190 |

**Table X**

| Ex/Comp Ex | 18 | 19 | D |
|---|---|---|---|
| Temp (°F/°C) for P Test | 365/185 | 365/185 | 365/185 |
| P (psi/ MPa) @ 22289 s⁻¹ | 7819/ 53.9 | 7495/ 51.7 | 16636/ 114.7 |
| P (psi/ MPa) @ 15921 s⁻¹ | 6264/ 43.2 | 5790/ 39.9 | 14196/ 97.9 |
| P (psi/ MPa) @ 9552 s⁻¹ | 5040/ 34.7 | 4409/ 30.4 | 12080/ 83.3 |
| P (psi/ MPa) @ 6368 s⁻¹ | 4507/ 31.1 | 3703/ 25.5 | 11095/ 76.5 |
| P (psi/ MPa) @ 4776 s⁻¹ | 4277/ 29.5 | 3410/ 23.5 | 10625/ 73.3 |
| P(psi/ MPa) @ 3184 s⁻¹ | 4090/ 28.2 | 3086/ 21.3 | 10199/ 70.3 |
| P(psi/ MPa) @ 2547 s⁻¹ | 4003/ 27.6 | 2969/ 20.5 | 10228/ 70.5 |
| P (psi/ MPa) @ 1592 s⁻¹ | 3931/ 27.1 | 2792/ 19.2 | 9993/ 68.9 |

The data presented in Tables IX and X demonstrate several points. First, the data in Table X show that, for a given composition of matter, a two pass procedure (Ex 19) provides improved flow characteristics relative to a one pass procedure
(Ex 18). Second, the data in Table X show the beneficial effect of including a plasticizer. See, Comp Ex D with no plasticizer versus Ex 18 and Ex 19 with a plasticizer. Third, the data in Table IX show that an improvement in Wet COF (mason tile) accompanies a decrease in abrasion resistance. Surprisingly, however, stitch tear strength remains nearly constant. Similar results are expected with other compositions and process conditions, all of which are disclosed above. Skilled artisans can readily choose process conditions to provide a desirable balance between flow properties and Wet COF on the one hand and abrasion resistance on the other hand.
EX 20-22

The composition of Comp Ex D is processed as in Ex 5-6 save for increasing the extruder screw speed for the 30 mm twin screw extruder to 400 rpm and using uniform barrel temperature settings of 280°C (Ex 20), 310°C (Ex 21) and 330°C (Ex 22). The settings provide respective polymer melt temperatures of 302°C, 335°C and 356°C. Injection molding test data are shown in Table XI below together with that for Comp Ex D.

**Table XI**

| Ex/Comp Ex | 20 | 21 | 22 | D |
|---|---|---|---|---|
| Temp (°F/°C) for P Test | 365/ 185 | 365/ 185 | 365/ 185 | 365/ 185 |
| P(psi/ MPa) @ 22289 s⁻¹ | 19375/ 133.6 | 18757/ 129.3 | 16563/ 114.2 | 16636/ 114.7 |
| P(psi/ MPa) @ 15921 s⁻¹ | 17067/ 117.7 | 16420/ 113.2 | 14281/ 98.5 | 14196/ 97.9 |
| P (psi/ MPa) @ 9552 s⁻¹ | 15156/ 104.5 | 14230/ 98.1 | 12326/ 85.0 | 12080/83.3 |
| P(psi/ MPa) @ 6368 s⁻¹ | 14288/ 98.5 | 13304/ 91.7 | 11370/ 76.5 | 11095/ 76.5 |
| P (psi/ MPa) @ 4776 s⁻¹ | 13965/ 78.4 | 12804/ 88.3 | 10889/ 75.1 | 10625/ 73.3 |
| P(psi/ MPa) @ 3184 s⁻¹ | 13612/ 93.9 | 12407/ 85.5 | 10507/ 72.4 | 10199/ 70.3 |
| P (psi/ MPa) @ 2547 s⁻¹ | 13524/ 93.2 | 12260/ 84.5 | 10319/ 71.1 | 10228/ 70.5 |
| P (psi/ MPa) @ 1592 s⁻¹ | 13568/ 93.5 | 12399/ 86.6 | 10452/ 72.1 | 9993/ 68.9 |

The data in Table XI show that changes in melt processing apparatus require alterations in apparatus parameters to attain nearly equivalent results. The data for Ex 22 are close to that for Comp Ex D. In order to attain such data, the melt processing temperature for a 30 mm twin screw extruder has to be 330°C. As with Ex 18 and 19, addition of a plasticizer should provide a dramatic reduction in peak pressure measurements. Similar results are expected with other compositions and process conditions, all of which are disclosed above.

## Claims

1. An elastomeric composition consisting essentially of:
a. 20 to 50 parts by weight, based upon combined weight of a and b, of a crystalline polyolefin having a melt flow rate, determined at a temperature of 230°C with a 2.16 kg weight of at least 35g/10min. and which is selected from the group consisting of polypropylene homopolymers and propylene/ethylene copolymers;
b. 80 to 50 parts by weight, based upon combined weight of a and b, of an elastomeric ethylene/alpha-olefin polymer, the polymer optionally having polymerized therein a diene monomer;
c, 1 to 200 parts by weight, per 100 parts by weight of elastomeric polymer, of a plasticizer, the plasticizer being selected from the group consisting of hydrocarbon oils and alkyl esters of a carboxylic acid; and, optionally,
d. from greater than 0 to 40 parts by weight, per 100 parts by weight of a and b, of a material that provides an increase in wet coefficient of friction, as measured in accordance with ASTM D-1894 using wet quarry tile, over the wet coefficient of friction of a composition including only a, b and c; and optionally e a filler in an amount within a range of from 0 to 70 parts by weight, based on combined weight of a and b, the filler being selected from the group consisting of glass, silica, carbon black, metal carbonates, metal sulfates, metal oxides, talc, clay and graphite fibers;
the composition being substantially free of crosslinking or insoluble gels, the ethylene/alpha-olefin polymer having a viscosity, measured at a temperature of 200° C and at a shear rate of 200 sec⁻¹, that is at least nine times greater than that of the crystalline polyolefin.

2. The composition of Claim 1, wherein the crystalline polyolefin has a molecular weight distribution (M_{w}/Mₙ) of at least 2.0.

3. The composition of Claim 1, wherein the ethylene/ alpha-olefin polymer has at least one of (a) a Mooney viscosity (ML₁₊₄ at 125° C) of at least 20, and (b) a molecular weight distribution (M_{w}/Mₙ) of at least 2.0.

4. The composition of Claim 3, wherein the ethylene/alpha-olefin polymer has a Mooney viscosity of at least 70.

5. The composition of any of Claims 1-4, wherein the ethylene/alpha-olefin polymer is an ethylene/alpha-olefin/diene monomer terpolymer, the diene being selected from the group consisting of norbornadiene, dicyclopentadiene, 1,4-hexadiene, piperylene or 5-ethylidene-2-norbornene and mixtures thereof.

6. The composition of Claim 1, wherein the ethylene/α-olefin polymer has polymerized therein at least one α-alefin comonomer, the α-olefin containing from 3 to 20 carbon atoms.

7. The composition of Claim 1, wherein the plasticizer is a hydrocarbon oil selected from the group consisting of naphthenic oils and paraffinic oils.

8. The composition of Claim 1, wherein the crystalline polyolefin and the ethylene/α-olefin polymer are present as two distinct phases, the crystalline polyolefin phase being at least co-continuous with the ethylene/α-olefin polymer phase, the composition having an abrasion resistance (ASTM D 1630-83, NBS Abrader) that is greater than that of a like composition prepared from the same components, but with a single continuous phase formed from the ethplene/α-olefin polymer.

9. The composition of Claim 1, wherein the wet COFE material is (a) selected from the group consisting of tackifiers and low molecular weight, low crystallinity polymers, and (b) present in an amount greater than 0 parts by weight, the amount imparting, when the wet COFE material is a low molecular weight, low crystallinity polymer, improved processibility to the composition, as determined by a reduction in peak injection molding pressure, relative to a composition that is (1) subjected to the same processing conditions and (2) identical save for the absence of the COFE material.

10. A process for preparing an elastomeric composition, the process comprising subjecting a combination of: a. from 20 to 50 parts by weight, based upon combined weight of a and b, of a crystalline polyolefin having a melt flow rate, determined at a temperature of 230°C with a 2·16 kg weight, of at least 35 g/10min. and which is selected from the group consisting of polypropylene homopolymers and propylene/ethylene copolymers; b. from 80 to 50 parts by weight, based upon combined weight of a and b, of an elastomeric ethylene/alpha-olefin polymer, the polymer optionally having polymerized therein a diene monomer, c. from 1 to 200 parts by weight, per 100 parts by weight of elastomeric polymer, of a plasticizer, the plasticizer being selected from the group consisting of hydrocarbon oils and alkyl esters of a carboxylic acid; and, optionally, d. from 0 to 40 parts by weight, per 100 parts by weight of a. and b, of a material that provides an increase in wet coefficient of friction, as measured in accordance with ASTM D-1894 using wet quarry tile, over the wet coefficient of friction of a composition including only a, b and c, to conditions of temperature, shear and pressure to form a two phase blend composition wherein the crystalline polyolefin is at least a co-continuous phase with the ethylene/ alpha-olefin polymer phase; the composition being substantially free of crosslinking or insoluble gels, the sthylene/alpha-olefin polymer having a viscosity, measured at a temperature of 200° C and at a shear rate of 200 sec⁻¹, that is at least nine times greater than that of the crystalline polyolefin.

11. The process of Claim 10, wherein a and b are subjected to conditions of temperature, shear and pressure to form a first melt blended composition after which the first melt blended composition and c are subjected to conditions of temperature, shear and pressure to form the two phase blend composition, the two phase composition having a Wet COF greater than that of a two phase composition formed by subjecting a combination of a, b and c to a single iteration of conditions of temperature, shear and pressure.

12. The process of Claim 11, wherein the conditions used to form the first melt blended composition and the conditions used to form the two phase composition from the first melt blended composition are the same.

13. The process of Claim 12, wherein the conditions of shear, pressure and temperature are provided by a 30 mm twin screw extruder that operates at an extruder screw speed of 400 rpm with barrel temperature settings that raise the first melt blended composition and the two phase composition to a melt temperature of at least 330°C.

14. An article of manufacture having at least one component thereof fabricated from the composition of any oi Claims 1-9, the article having (a) an abrasion resistance (ASTM D 1630-83, NBS Abrader) that is greater than that of a like article prepared from the same composition, but with a single continuous phase formed from the ethylene/α-olefin polymer and, when component d is present, a COF, as measured in accordance with ASTM D-1894 using wet quarry tile, of at least 0.3, preferably at least 0.4.

## Patentansprüche

1. Elastomerzusammensetzung, bestehend im Wesentlichen aus:
(a) 20 bis 50 Gewichtsteilen, basierend auf dem kombinierten Gewicht von (a) und (b), eines kristallinen Polyolefins mit einer Schmelzfließgeschwindigkeit, bestimmt bei einer Temperatur von 230 °C mit einem Gewicht von 2,16 kg, von mindestens 35 g/10 min, das ausgewählt ist aus der Gruppe, bestehend aus Polypropylen-Homopolymeren und Propylen/Ethylen-Copolymeren;
(b) 80 bis 50 Gewichtsteilen, basierend auf dem kombinierten Gewicht von (a) und (b), eines elastomeren Ethylen/alpha-Olefin-Polymers, wobei das Polymer gegebenenfalls ein darin polymerisiertes Dienmonomer aufweist;
(c) 1 bis 200 Gewichtsteilen pro 100 Gewichtsteile elastomeres Polymer eines Weichmachers, wobei der Weichmacher ausgewählt ist aus der Gruppe, bestehend aus Kohlenwasserstoffölen und Alkylestern einer Carbonsäure; und gegebenenfalls;
(d) mehr als 0 bis 40 Gewichtsteilen pro 100 Gewichtsteile von (a) und (b) eines Materials, das eine Zunahme des Reibungskoeffizienten im Nasszustand, wie gemessen gemäß ASTM D-1894 unter Verwendung einer nassen Tonfliese, gegenüber dem Reibungskoeffizienten im Nasszustand einer nur (a), (b) und (c) einschließenden Zusammensetzung, bereitstellt, und gegebenenfalls
(e) eines Füllstoffs mit einer Menge im Bereich von 0 bis 70 Gewichtsteilen, basierend auf dem kombinierten Gewicht von (a) und (b), wobei der Füllstoff ausgewählt ist aus der Gruppe, bestehend aus Glas, Siliciumdioxid, Ruß, Metallcarbonaten, Metallsulfaten, Metalloxiden, Talkum, Ton, und Graphitfasern;
wobei die Zusammensetzung im Wesentlichen frei von vernetzenden oder unlöslichen Gelen ist, das Ethylen/alpha-Olefin-Polymer eine Viskosität, gemessen bei einer Temperatur von 200 °C und einer Schergeschwindigkeit von 200 Sek⁻¹, aufweist, die um mindestens das Neunfache größer als diejenige des kristallinen Polyolefins ist.

2. Zusammensetzung nach Anspruch 1, wobei das kristalline Polyolefin eine Molekulargewichtsverteilung (M_{w}/Mₙ) von mindestens 2,0 aufweist.

3. Zusammensetzung nach Anspruch 1, wobei das Ethylen/alpha-Olefin-Polymer mindestens eines von (a) einer Mooney-Viskosität (ML₁₊₄ bei 125 °C) von mindestens 20, und (b) einer Molekulargewichtsverteilung (M_{w}/Mₙ) von mindestens 2,0 aufweist.

4. Zusammensetzung nach Anspruch 3, wobei das Ethylen/alpha-Olefin-Polymer eine Mooney-Viskosität von mindestens 70 aufweist.

5. Zusammensetzung nach einem der Ansprüche 1 bis 4, wobei es sich bei dem Ethylen/alpha-Olefin-Polymer um ein Ethylen/Alpha-Olefin/Dien-Monomer-Terpolymer handelt, wobei das Dien ausgewählt ist aus der Gruppe, bestehend aus Norbornadien, Dicyclopentadien, 1,4-Hexadien, Piperylen oder 5-Ethyliden-2-norbornen und Gemischen davon.

6. Zusammensetzung nach Anspruch 1, wobei das Ethylen/α-Olefin-Polymer mindestens ein darin polymerisiertes α-Olefin-Comonomer aufweist, wobei das α-Olefin 3 bis 20 Kohlenstoffatome enthält.

7. Zusammensetzung nach Anspruch 1, wobei es sich bei dem Weichmacher um ein Kohlenwasserstofföl, ausgewählt aus der Gruppe, bestehend aus Naphthenölen und Paraffinölen, handelt.

8. Zusammensetzung nach Anspruch 1, wobei das kristalline Polyolefin und das Ethylen/α-Olefin-Polymer als zwei einzelne Phasen vorliegen, wobei die kristalline Polyolefinphase mit der Ethylen/α-Olefin-Polymer-Phase zumindest co-kontinuierlich ist, wobei die Zusammensetzung eine Abriebfestigkeit (ASTM D 1630-83, NBS Abrader) aufweist, die größer als diejenige einer ähnlichen Zusammensetzung ist, die aus denselben Komponenten, jedoch mit einer einzelnen kontinuierlichen Phase, die aus dem Ethylen/α-Olefin-Polymer gebildet ist, hergestellt ist.

9. Zusammensetzung nach Anspruch 1, wobei das nasse COFE-Material (a) ausgewählt ist aus der Gruppe, bestehend aus Klebrigmachern und Polymeren mit niedrigem Molekulargewicht und niedriger Kristallinität, und (b) in einer Menge vorliegt, die größer als 0 Gewichtsteile ist, wobei die Menge, wenn es sich bei dem nassen COFE-Material um ein Polymer mit niedrigem Molekulargewicht und niedriger Kristallinität handelt, der Zusammensetzung eine wie durch eine Reduktion im Spitzenspritzgussdruck bestimmte, verbesserte Verarbeitungsfähigkeit in Bezug auf eine Zusammensetzung, die (1) denselben Verarbeitungsbedingungen unterzogen wurde und (2) für die Abwesenheit des COFE-Materials gleichermaßen sicher ist, verleiht.

10. Verfahren zur Herstellung einer Elastomerzusammensetzung, wobei das Verfahren das Unterziehen einer Kombination von (a) 20 bis 50 Gewichtsteilen, basierend auf dem kombinierten Gewicht von a und b, eines kristallinen Polyolefins mit einer Schmelzfließgeschwindigkeit, bestimmt bei einer Temperatur von 230 °C mit einem Gewicht von 2,16 kg, von mindestens 35 g/10 min, ausgewählt aus der Gruppe, bestehend aus Polypropylen-Homopolymeren und Propylen/Ethylen-Copolymeren; (b) 80 bis 50 Gewichtsteilen, basierend auf dem kombinierten Gewicht von (a) und (b), eines elastomeren Ethylen/alpha-Olefin-Polymers, wobei das Polymer gegebenenfalls ein darin polymerisiertes Dienmonomer aufweist; (c) 1 bis 200 Gewichtsteilen pro 100 Gewichtsteile elastomeres Polymer eines Weichmachers, wobei der Weichmacher ausgewählt ist aus der Gruppe, bestehend aus Ölen und Alkylestern einer Carbonsäure; und gegebenenfalls (d) 0 bis 40 Gewichtsteilen pro 100 Gewichtsteile von (a) und (b) eines Materials, das eine Zunahme des Reibungskoeffizienten im Nasszustand, wie gemessen gemäß ASTM D-1894 unter Verwendung einer nassen Tonfliese, gegenüber einem Reibungskoeffizienten im Nasszustand einer nur (a), (b) und (c) einschließenden Zusammensetzung, bereitstellt, unter Temperatur-, Scher- und Druckbedingungen zur Bildung einer zweiphasigen Mischzusammensetzung, wobei das kristalline Polyolefin eine zumindest co-kontinuierliche Phase mit der Ethylen/alpha-Olefin-Polymer-Phase ist; wobei die Zusammensetzung im Wesentlichen frei von vernetzenden oder unlöslichen Gelen ist, wobei das Ethylen/alpha-Olefin-Polymer eine Viskosität, gemessen bei einer Temperatur von 200 °C und einer Schergeschwindigkeit von 200 Sek⁻¹ aufweist, die um mindestens das Neunfache größer als diejenige des kristallinen Polyolefins ist.

11. Verfahren nach Anspruch 10, wobei (a) und (b) Temperatur-, Scher- und Druckbedingungen unterzogen werden, um eine erste schmelzgemischte Zusammensetzung zu bilden, wonach die erste schmelzgemischte Zusammensetzung und (c) Temperatur-, Scher- und Druckbedingungen unterzogen werden, um die zweiphasige Mischzusammensetzung zu bilden, wobei die zweiphasige Zusammensetzung einen COF im Nasszustand aufweist, der größer als derjenige einer zweiphasigen Zusammensetzung ist, die durch Unterziehen einer Kombination von (a), (b) und (c) einer einzelnen Iteration von Temperatur-, Scher- und Druckbedingungen unterzogen wurde.

12. Verfahren nach Anspruch 11, wobei die zur Bildung der ersten schmelzgemischten Zusammensetzung verwendeten Bedingungen und die zur Bildung der zweiphasigen Zusammensetzung verwendeten Bedingungen aus der ersten schmelzgemischten Zusammensetzung dieselben sind.

13. Verfahren nach Anspruch 12, wobei die Scher-, Druck- und Temperaturbedingungen durch einen Doppelschneckenextruder mit 30 mm bereitgestellt sind, der mit einer Extruderschneckengeschwindigkeit von 400 UpM mit Barrel-Temperatureinstellungen arbeitet, die die erste schmelzgemischte Zusammensetzung und die zweiphasige Zusammensetzung auf eine Schmelztemperatur von mindestens 330 °C erhöhen.

14. Herstellungsgegenstand, bei welchem mindestens eine Komponente davon aus der Zusammensetzung nach einem der Ansprüche 1 bis 9 hergestellt ist, wobei der Gegenstand (a) eine Abriebfestigkeit (ASTM D 1630-83, NBS Abrader) aufweist, die größer als diejenige eines ähnlichen Gegenstands ist, der aus derselben Zusammensetzung, jedoch mit einer einzelnen kontinuierlichen Phase, die aus dem Ethylen/alpha-Olefin-Polymers gebildet ist, aufweist und, wenn Komponente (d) vorliegt, einen COF, wie gemäß ASTM D-1894 unter Verwendung eines nassen Tonziegel, von mindestens 0,3, vorzugsweise mindestens 0,4 aufweist.

## Revendications

1. Composition élastomère qui est constituée essentiellement de :
a) 20 à 50 parties en poids, par rapport au poids combiné de a et b, d'une polyoléfine cristalline ayant un indice de fluidité à l'état fondu, déterminé à la température de 230 °C avec une charge de 2,16 kg, d'au moins 35 g/10 min., choisie parmi les homopolymères polypropylène et les copolymères d'éthylène et de propylène,
b) 80 à 50 parties en poids, par rapport au poids combiné de a et b, d'un polymère élastomère d'éthylène et d'α-oléfine, contenant éventuellement à l'état polymérisé un diène monomère,
c) 1 à 200 parties en poids, pour 100 parties en poids de polymère élastomère, d'un plastifiant choisi parmi les huiles hydrocarbonées et les esters alkyliques d'acide carboxylique,
et éventuellement de
d) plus de 0 à 40 parties en poids, pour 100 parties en poids de a et b, d'un produit qui apporte une augmentation du coefficient de frottement en présence d'humidité par rapport au coefficient de frottement en présence d'humidité d'une composition comprenant seulement a, b et c, le coefficient de frottement étant mesuré conformément à la norme ASTM D-1894 sur des carreaux humides,
et d'une charge présente en une quantité comprise dans l'intervalle allant de 0 à 70 parties en poids par rapport au poids combiné de a et b, la charge étant choisie parmi le verre, la silice, le noir de carbone, les carbonates métalliques, les sulfates métalliques, les oxydes métalliques, le talc, l'argile et les fibres de graphite,
la composition étant pratiquement exempte de réticulation ou de gels insolubles, et le polymère d'éthylène et d'α-oléfine ayant une viscosité, mesurée à la température de 200 °C et à une vitesse de cisaillement de 200 s⁻¹, qui est au moins neuf fois plus grande que celle de la polyoléfine cristalline.

2. Composition selon la revendication 1, dont la polyoléfine cristalline a un indice de distribution des masses moléculaires (Mₚ/Mₙ) d'au moins 2,0.

3. Composition selon la revendication 1, dont le polymère d'éthylène et d'α-oléfine présente au moins l'une des propriétés suivantes :
(a) une viscosité Mooney (ML₁₊₄ à 125 °C) d'au moins 20,
(b) un indice de distribution des masses moléculaires (Mₚ/Mₙ) d'au moins 2,0.

4. Composition selon la revendication 3, dont le polymère d'éthylène et d'α-oléfine présente une viscosité Mooney d'au moins 70.

5. Composition selon l'une quelconque des revendications 1 à 4, dont le polymère d'éthylène et d'α-oléfine est un terpolymère d'éthylène, d'α-oléfine et de diène monomère, le diène étant choisi parmi le norbornadiène, le dicyclopentadiène, le 1,4-hexadiène, le pipérylène, le 5-éthylidène-2-norbornène et leurs mélanges.

6. Composition selon la revendication 1, dont le polymère d'éthylène et d'α-oléfine contient sous forme polymérisée au moins un comonomère α-oléfine ayant 3 à 20 atomes de carbone.

7. Composition selon la revendication 1, dont le plastifiant est une huile hydrocarbonée choisie parmi les huiles naphténiques et les huiles paraffiniques.

8. Composition selon la revendication 1, dans laquelle la polyoléfine cristalline et le polymère d'éthylène et d'α-oléfine sont présents sous la forme de deux phases distinctes, la phase de polyoléfine cristalline étant au moins cocontinue avec la phase de polymère d'éthylène et d'α-oléfine, et la composition présentant une résistance à l'abrasion (ASTM D 1630-83, abrasion NBS) qui est supérieure à celle d'une composition semblable, préparée à partir des mêmes constituants, mais présentant une seule phase continue, formée par le polymère d'éthylène et d'α-oléfine.

9. Composition selon la revendication 1, dans laquelle le produit augmentant le coefficient de frottement en présence d'humidité (produit ACOF) est un produit choisi parmi les agents communiquant de la pégosité et les polymères faiblement cristallins, de faible masse moléculaire, et est présent en une quantité supérieure à 0 partie en poids, cette quantité communiquant, lorsque le produit ACOF est un polymère faiblement cristallin, de faible masse moléculaire, une meilleure aptitude au traitement à la composition, comme le montre une réduction de la pression maximale lors du moulage par injection, par rapport au cas d'une composition qui est soumise aux mêmes conditions de traitement et qui est identique à cela près qu'elle ne contient pas de produit ACOF.

10. Procédé de préparation d'une composition élastomère, qui comprend l'étape consistant à soumettre une combinaison de :
a) 20 à 50 parties en poids, par rapport au poids combiné de a et b, d'une polyoléfine cristalline ayant un indice de fluidité à l'état fondu, déterminé à la température de 230 °C avec une charge de 2,16 kg, d'au moins 35 g/10 min., qui est choisie parmi les homopolymères polypropylène et les copolymères d'éthylène et de propylène,
b) 80 à 50 parties en poids, par rapport au poids combiné de a et b, d'un polymère élastomère d'éthylène et d'α-oléfine, contenant éventuellement à l'état polymérisé un diène monomère,
c) 1 à 200 parties en poids, pour 100 parties en poids de polymère élastomère, d'un plastifiant choisi parmi les huiles hydrocarbonées et les esters alkyliques d'acide carboxylique,
et éventuellement d) 0 à 40 parties en poids, pour 100 parties en poids de a et b, d'un produit augmentant le coefficient de frottement en présence d'humidité, par rapport à celui d'une composition comprenant seulement a, b et c, le coefficient de frottement étant mesuré selon la norme ASTM D-1894 sur des carreaux humides,
à des conditions de température, de cisaillement et de pression pour former une composition à deux phases, dans laquelle la polyoléfine cristalline forme au moins une phase cocontinue avec la phase de polymère d'éthylène et d'α-oléfine,
la composition étant pratiquement exempte de réticulation ou de gels insolubles, et le polymère d'éthylène et d'α-oléfine ayant une viscosité, mesurée à une température de 200 °C et à une vitesse de cisaillement de 200 s⁻¹, qui est au moins neuf fois plus grande que celle de la polyoléfine cristalline.

11. Procédé selon la revendication 10, dans lequel on soumet a et b à des conditions de température, de cisaillement et de pression pour former un premier mélange à l'état fondu, après quoi on soumet le premier mélange à l'état fondu et c à des conditions de température, de cisaillement et de pression pour former la composition à deux phases, la composition à deux phases ayant un coefficient de frottement en présence d'humidité qui est supérieur à celui d'une composition à deux phases que l'on forme en soumettant une combinaison de a, b et c à une simple répétition de conditions de température, de cisaillement et de pression.

12. Procédé selon la revendication 11, dans lequel les conditions utilisées pour former le premier mélange à l'état fondu et les conditions utilisées pour former la composition à deux phases à partir du premier mélange à l'état fondu sont les mêmes.

13. Procédé selon la revendication 12, dans lequel les conditions de cisaillement, de pression et de température sont fournies par une extrudeuse à deux vis de 30 mm, qui travaille à une vitesse de la vis de 400 tours/min. et avec des réglages de la température du corps qui élèvent la température du premier mélange à l'état fondu et de la composition à deux phases jusqu'à une température de la masse fondue d'au moins 330 °C.

14. Article manufacturé dont au moins un constituant est fabriqué à partir de la composition selon l'une quelconque des revendications 1 à 9, ledit article présentant une résistance à l'abrasion (ASTM D 1630-83, abrasion NBS) qui est supérieure à celle d'un article similaire préparé à partir d'une composition identique, mais présentant une seule phase continue, formée par le polymère d'éthylène et d'α-oléfine, et présentant, lorsque le constituant d est présent, un coefficient de frottement, mesuré selon la norme ASTM D-1894 sur des carreaux humides, d'au moins 0,3, de préférence d'au moins 0,4.
